# EUROPEAN PATENT APPLICATION

(11) **EP 4 664 649 A1**
(43) Date of publication of application: **17.12.2025**
(21) Application number: 24927592.6
(22) Date of filing: 12.12.2024
(51) Int. Cl.: H01M 50/383

(54) **MODULE COVER, BATTERY PACK, AND VEHICLE**

(30) Priority: 02.04.2024 KR 20240044745
(71) Applicant: LG ENERGY SOLUTION, LTD., Seoul 07335 (KR)
(72) Inventor: LEE, Gi Hwan, Daejeon 34122 (KR); JUNG, Ki Taek, Daejeon 34122 (KR)
(74) Representative: BCKIP Part mbB
(86) International application number: PCT/KR2024/020282
(87) International publication number: WO 2025/211536

(57) **Abstract**

Disclosed are a module cover, a battery pack, and vehicle, the module cover having a panel shape having an area that covers all a plurality of battery modules adjacent to one another with a crossbeam interposed therebetween, in which a fixing portion is formed on a portion corresponding to the crossbeam, and the module cover is coupled to the crossbeam by means of the fixing portion.

## Description

### [Technical Field]

The present disclosure relates to a module cover, a battery pack, and a vehicle, the module cover being capable of preventing propagation of a fire between adjacent battery modules in the event of a fire in the battery module, reducing the number of module covers, reducing production costs, improving assembling efficiency, and reducing an assembling tolerance.

### [Background Art]

Recently, a technology for reducing carbon has been actively developed to solve environmental issues such as abnormal atmospheric temperatures. In order to reduce carbon, energy needs to be produced by environmentally friendly methods instead of fossil fuel, the produced energy needs to be stored in the form of electrical energy, and the stored electrical energy needs to be used for vehicles, various types of industrial sites, and homes.

In order to utilize electrical energy while reducing carbon, it is essential to use batteries capable of storing and retrieving electrical energy. Therefore, it is essential to ensure the performance of the battery to sufficiently store electrical energy and use the electrical energy without discomfort.

The battery mainly uses a redox reaction of metal ions. The battery uses metal ions with a high density to improve a capacity of the battery and charging and discharging performance and efficiency of the battery. Many studies are also being conducted on materials, which constitute electrolytes, and on solid electrolytes and the like. However, there is a general problem in that stability deteriorates as the performance of the battery is developed.

Batteries used in vehicles, industries, or homes are manufactured in physical units called packs. The battery pack is configured such that a plurality of battery cells is embedded in a battery casing and sealed. The battery pack serves to prevent fire from spreading to the outside even in the event of an accident such as thermal runaway in the battery and protect the battery cells therein so that the battery cells are not degraded by being affected by an external environment, or the battery cells are not physically damaged.

In the battery pack, the plurality of battery cells is embedded in an intermediate form of a module or an assembly (cell module assembly (CMA)). The battery module or the assembly is configured by assembling the plurality of battery cells into one module or assembly. A plurality of modules is fastened into a pack casing, such that the battery pack is completely manufactured. When the battery is maintained, the maintenance may be performed on the unit of the module or the assembly, which facilitates the maintenance.

A plurality of unit battery cells, which constitutes the module or the assembly, includes a positive electrode, a negative electrode, and an electrolyte. Because the battery cell generates heat when the battery cell is charged and discharged, it is necessary to effectively dissipate heat from the battery cell. In addition, the battery module, the assembly, or the battery pack needs to be designed to efficiently dissipate heat to prevent a safety accident.

Meanwhile, the battery may be degraded when the battery is subjected to manufacturing errors, when the battery is excessively charged or discharged, or when the battery ages. Further, when the battery continues to deteriorate, a fire may eventually occur. Therefore, it is necessary to prepare in advance to prevent a fire from occurring in the battery. To this end, it is important to consistently sense a state of the battery and recognize and cope with, in advance, a problem when the problem occurs. In the event of an unexpected problem, it is necessary to minimize damage.

In particular, a gas or flame is vented through a module cover of the battery module. In case that the module cover is withdrawn or a gap is formed when the gas is vented through the corresponding module, a fire is easily spread to another battery module adjacent to the corresponding gap.

The spread of the fire eventually leads to a fire in the battery pack and causes damage by the fire. Therefore, there is a need for a technology related to the module cover capable of assuredly preventing the spread of the fire to the adjacent battery module while smoothly venting the gas.

The foregoing explained as the background is intended merely to aid in the understanding of the background of the present disclosure, and is not intended to mean that the present disclosure falls within the purview of the related art that is already known to those skilled in the art.

### [Disclosure]

### [Technical Problem]

The present disclosure has been made in an effort to solve the above-mentioned problem, and an object of the present disclosure is to provide a module cover, a battery pack, and a vehicle, the module cover being capable of preventing propagation of a fire between adjacent battery modules in the event of a fire in the battery module, reducing the number of module covers, reducing production costs, improving assembling efficiency, and reducing an assembling tolerance.

Technical problems to be solved by the present disclosure are not limited to the above-mentioned technical problems, and other technical problems, which are not mentioned above, may be clearly understood from the following descriptions by those skilled in the art to which the present disclosure pertains.

### [Technical Solution]

In order to achieve the above-mentioned object, a battery pack according to the present disclosure includes: a pack casing having a plurality of crossbeams spaced apart from one another in an internal space; battery modules disposed between the adjacent crossbeams and each having a flange protruding outward, the battery modules being coupled to the crossbeam by means of the flanges; and a module cover having a panel shape having an area that covers all the plurality of adjacent battery modules, the module cover having fixing portions, which are formed to correspond to the crossbeams, and coupled to the crossbeams by means of the fixing portions.

The crossbeams may be disposed in a lattice shape on the pack casing, and the plurality of battery modules may be installed in a matrix shape having columns and rows.

The module cover may be coupled to correspond to the row of the battery modules, and one module cover may cover all the battery modules included in one row.

Two opposite surfaces of the crossbeam may be directed toward the battery modules, and the flange of the battery module may be coupled to an end of the crossbeam exposed between the battery modules at two opposite sides.

The plurality of flanges may be spaced apart from one another and formed on the battery modules at two opposite sides disposed with the crossbeam interposed therebetween, and the flanges of the battery modules at the two opposite sides may be disposed alternately and coupled to the crossbeams.

The crossbeam may be formed to be lower in height than the battery module, and the flange of the battery module and the module cover may be coupled to an end of the crossbeam.

The flange of the battery module and the module cover may be fastened together to the crossbeam by means of the same fastening mechanism.

The module cover may include: cover portions each having a planar shape and configured to cover the battery module; and the fixing portion recessed between the adjacent cover portions and coupled to the crossbeam.

A venting part, through which a gas or flame generated in the battery module is vented, may be formed on the cover portion.

A through-hole, which is penetrated by a fastening mechanism coupled to the crossbeam, may be formed in the fixing portion.

The fixing portion of the module cover and the flange of the battery module may be penetrated by a fastening mechanism, and the fastening mechanism may penetrate the fixing portion of the module cover and the flange of the battery module and then be fastened to the crossbeam.

An end of the crossbeam disposed between the adjacent battery modules may be covered by the fixing portion of the module cover.

The end of the crossbeam and the fixing portion of the module cover may have planar shapes facing each other.

The plurality of flanges of the battery module may be spaced apart from one another and coupled to an end of the crossbeam.

A spacer may be disposed between the plurality of spaced flanges, and an empty space between the flanges may be filled with the spacer.

The flange and the spacer may be disposed on the same plane and adjoin the fixing portion of the module cover.

The end of the crossbeam may be covered by the fixing portion of the module cover, and a protruding portion may be formed on the fixing portion so that an empty space between the plurality of spaced flanges is filled with the protruding portion.

A bracket may be provided outside the fixing portion of the module cover, the bracket may be fastened to the crossbeam together with the fixing portion of the module cover, a pressing portion may be formed on the bracket and press the fixing portion of the module cover between the plurality of spaced flanges, and an empty space between the plurality of spaced flanges may be filled with the fixing portion of the module cover pressed by the pressing portion.

According to the embodiment of the present disclosure, a module cover may cover a plurality of battery modules installed between a plurality of crossbeams in a pack casing, and the module cover may have a panel shape having an area that covers all the plurality of battery modules adjacent to one another with the crossbeam interposed therebetween, in which a fixing portion is formed on a portion corresponding to the crossbeam, and the module cover is coupled to the crossbeam by means of the fixing portion.

### [Advantageous Effects]

According to the module cover, the battery pack, and the vehicle of the present disclosure, it is possible to prevent the propagation of a fire between the adjacent battery modules in the event of a fire in the battery module, reduce the number of module covers, reduce the production costs, improve the assembling efficiency, and reduce the assembling tolerance.

The effects obtained by the present disclosure are not limited to the aforementioned effects, and other effects, which are not mentioned above, will be clearly understood by those skilled in the art from the following description.

### [Description of Drawings]

FIG. 1 is a view illustrating a battery pack according to an embodiment of the present disclosure.
FIG. 2 is a view illustrating the battery pack illustrated in FIG. 1 when viewed from above.
FIG. 3 is an enlarged view of a part of the battery pack illustrated in FIG. 1.
FIG. 4 is a view illustrating a battery module of the battery pack illustrated in FIG. 1.
FIG. 5 is a view illustrating the battery module illustrated in FIG. 4 when viewed from above.
FIG. 6 is a view illustrating a state in which a spacer is coupled to the battery module illustrated in FIG. 5.
FIG. 7 is a view illustrating a protruding portion of a module cover according to the embodiment of the present disclosure.
FIG. 8 is a view illustrating a state in which a bracket is coupled to the battery module in FIG. 4.
FIG. 9 is a view illustrating a pressing portion of the bracket illustrated in FIG. 8.
FIG. 10 is a view illustrating an embodiment in which the battery pack of the present disclosure is applied to a vehicle.

### [Mode for Invention]

In the description of the embodiments disclosed in the present specification, the specific descriptions of publicly known related technologies will be omitted when it is determined that the specific descriptions may obscure the subject matter of the embodiments disclosed in the present specification. In addition, it should be interpreted that the accompanying drawings are provided only to allow those skilled in the art to easily understand the embodiments disclosed in the present specification, and the technical spirit disclosed in the present specification is not limited by the accompanying drawings, and includes all alterations, equivalents, and alternatives that are included in the spirit and the technical scope of the present disclosure.

The terms including ordinal numbers such as "first," "second," and the like may be used to describe various constituent elements, but the constituent elements are not limited by the terms. These terms are used only to distinguish one constituent element from another constituent element. Singular expressions include plural expressions unless clearly described as different meanings in the context.

In the present specification, it should be understood the terms "comprises," "comprising," "includes," "including," "containing," "has," "having" or other variations thereof are inclusive and therefore specify the presence of stated features, integers, steps, operations, elements, components, or combinations thereof, but do not preclude the presence or addition of one or more other features, integers, steps, operations, elements, components, or combinations thereof. The suffixes "module", "unit", "part", and "portion" used to describe constituent elements in the following description are used together or interchangeably in order to facilitate the description, but the suffixes themselves do not have distinguishable meanings or functions.

When one constituent element is described as being "coupled" or "connected" to another constituent element, it should be understood that one constituent element can be coupled or connected directly to another constituent element, and an intervening constituent element can also be present between the constituent elements. When one constituent element is described as being "coupled directly to" or "connected directly to" another constituent element, it should be understood that no intervening constituent element is present between the constituent elements.

Hereinafter, embodiments disclosed in the present specification will be described in detail with reference to the accompanying drawings. The same or similar constituent elements are assigned with the same reference numerals regardless of the reference numerals, and the repetitive description thereof will be omitted.

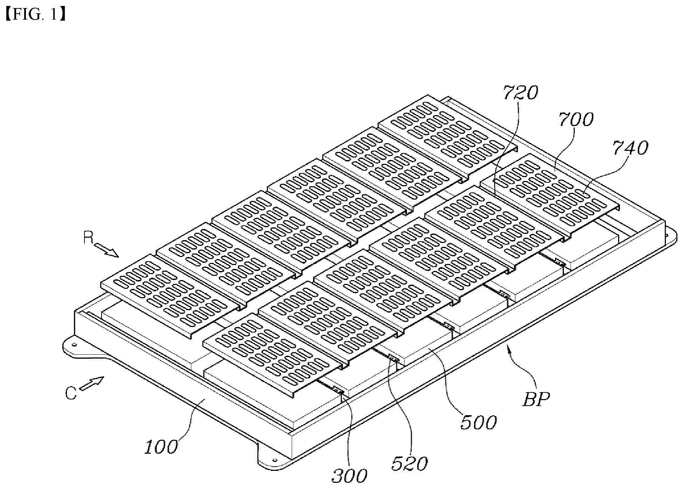

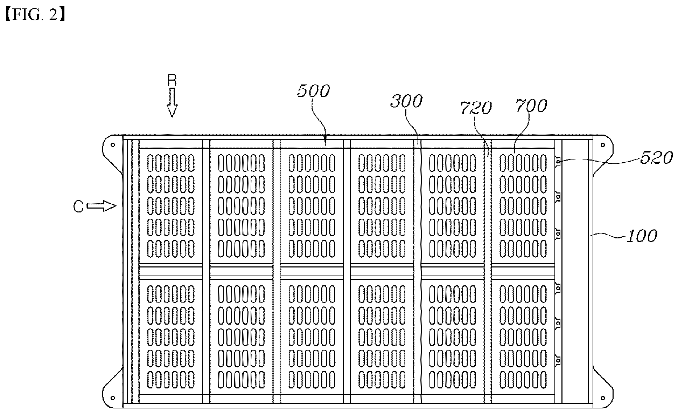

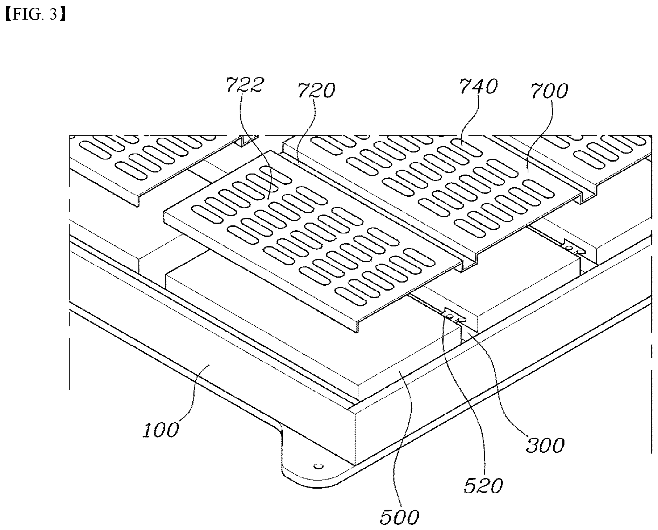

FIGS. 1 to 3 are views illustrating a battery pack according to an embodiment of the present disclosure. In the case of an illustrated battery pack BP, a plurality of battery modules 500 is embedded in a pack casing 100, and module covers 700 are coupled to the pack casing 100. After the module covers 700 are coupled to the battery modules 500, a pack cover is coupled to close the pack casing 100. In the illustrated embodiment, the pack cover is not illustrated in order to illustrate a structure in the battery pack BP.

The pack casing 100 may be made of a metallic material such as aluminum and ensure rigidity while effectively performing heat transfer, and the pack casing 100 may stably protect the battery even in a situation such as a collision.

A space for mounting the plurality of battery modules 500 is formed in the pack casing 100. Further, crossbeams 300 may be positioned together with the battery modules 500 in the space. The crossbeam 300 is provided in the pack casing 100 and serves to ensure rigidity of the battery pack BP while traversing the pack casing 100 in longitudinal and transverse directions. Further, the battery modules 500 are fastened to the crossbeams 300, such that assembling rigidity of the battery module 500 in the pack casing is maintained. In addition, gaps are formed between the battery modules 500 by the crossbeams 300, such that the crossbeams 300 also serve as partition walls that prevent heat transfer and fire propagation between the adjacent battery modules 500.

The crossbeam 300 is made of the same metallic material as the pack casing 100 so that the crossbeam 300 is assembled to the pack casing 100. Then, the crossbeam 300 may be coupled to the pack casing 100 by various methods such as welding or fastening. In addition, the crossbeam 300 may also absorb assembling tolerances by being mechanically fastened to the battery module 500 by bolting or the like, and the crossbeam 300 may make it easy to replace and install the battery module 500 during a subsequent process. In addition, the crossbeam is manufactured to have a hollow shape by extrusion or the like, such that robust bending rigidity may be implemented, and a weight may be reduced.

Meanwhile, the battery module 500 mentioned in the present disclosure refers to hardware for configuring a battery assembly, in which a plurality of battery cells are stacked, as a single unit. The battery module 500 needs to be interpreted as a concept including overall hardware, from complete housings to semi-assembled types of assemblies, such as straps or frames, to organize the battery assembly into a single unit.

Specifically, the battery pack BP according to the present disclosure includes the pack casing 100 having the plurality of crossbeams 300 provided in the internal space and spaced apart from one another, the battery modules 500 disposed between the adjacent crossbeams 300 and each having flanges 520 protruding outward, the battery modules 500 being coupled to the crossbeams 300 by means of the flanges 520, and the module covers 700 each having a panel shape having an area capable of covering the plurality of adjacent battery modules 500 together, the module cover 700 having fixing portions 720 formed at portions corresponding to the crossbeams 300 so that the module cover 700 is coupled to the crossbeams 300 by means of the fixing portions 720.

The pack casing 100 is divided into a plurality of installation spaces by the plurality of crossbeams 300. Further, one or more battery modules 500 may be inserted and mounted into the installation spaces. The battery modules 500 are coupled to the crossbeams 300 by means of the flanges 520 and maintain assembling rigidity. The battery modules 500 define load paths together with the crossbeams 300, such that the battery modules 500 serve to improve collision rigidity and bending rigidity of the entire battery pack BP. Further, the battery module 500 is replaced by being unfastened from the crossbeam 300.

Meanwhile, when the battery modules 500 are installed, the adjacent battery modules 500 are disposed adjacent to one another with the crossbeams 300 interposed therebetween. As illustrated, the battery module may be configured such that the battery cell assembly including the plurality of battery cells is inserted into a shape of a housing. The module cover 700 is coupled to close the battery module 500.

The propagation of a fire is prevented or maximally delayed by discharging a gas or flame generated by thermal runaway or the like in the battery cell. Further, the gas is induced to be vented only in a particular direction so that another adjacent battery module is not affected. To this end, the gas may be induced to be vented in a particular direction. In the illustrated embodiment, the gas or the like is induced to be vented upward.

In this case, because the module cover 700 is coupled to the upper side and covers the corresponding battery module 500, venting parts 740 may be formed on the module cover 700. The venting part 740 may be formed in various ways. Representatively, a temporarily cut line is formed on the module cover 700, and the temporarily cut line is cut and opened by high pressure when the gas is vented, such that the gas or flame is vented upward through the opened venting part 740 of the module cover 700. Of course, in case that the module cover is installed laterally, the venting part is also directed laterally, such that the gas is vented laterally. This direction may be set and implemented as a downward direction.

In the case of the present disclosure, module covers are not individually manufactured and applied for respective battery modules, but one module cover 700 may be configured to cover all the plurality of battery modules 500. First, in case that the module covers are individually applied for respective modules, the number of module covers is increased, which increases manufacturing costs. Further, in case that one module cover is lifted or separated from the battery module or damaged by a fire or the like, the fire may easily spread to the adjacent battery module.

Therefore, in the case of the present disclosure, the module covers are not individually produced and individually mounted to respectively correspond to the battery modules. However, a single module cover 700 having a large flat plate shape is manufactured, and the single module cover 700 covers all the plurality of adjacent battery modules 500, thereby increasing fastening rigidity between the module cover 700 and the battery modules 500 and thus minimizing a likelihood that flame propagates to another adjacent battery module 500.

Specifically, the crossbeams 300 are positioned between the adjacent battery modules 500. Further, the single module cover 700 covers all the adjacent battery modules 500. To this end, the fixing portions 720 are formed at the points on the module cover 700 between the adjacent battery modules 500, and the module cover 700 is coupled to the crossbeams 300 by means of the fixing portions 720, such that two opposite sides of one battery module 500 are surrounded by the crossbeams 300, and the upper side of the battery module 500 is perfectly blocked by the module cover 700, thereby implementing a structure in which the battery module 500 is completely blocked from the outside.

Further, even in the event of a fire, this minimizes a likelihood that flame propagates to the outside. As described above, the module cover 700 is manufactured as a single large-scale cover and covers all the plurality of battery modules 500, which reduces costs required to manufacture the module cover 700. Further, the module cover 700 may also be mounted at once, which reduces assembling costs. In particular, because the module cover 700 is fastened to the crossbeams 300, the module cover 700 may implement a complete sealed structure of the battery module 500 together with the crossbeam 300, and the assembling rigidity is also implemented, thereby minimizing a likelihood that the module cover 700 is withdrawn from the battery module 500 or damaged. The module cover 700 may be made of a fire resistance material such as mica so that the module cover 700 basically has flameproof and fireproof functions.

Meanwhile, the crossbeams 300 are disposed in the pack casing 100 while defining a lattice shape. The plurality of battery modules 500 may be installed in a matrix shape having rows R and columns C. That is, as illustrated, the plurality of crossbeams 300 are provided in a lattice shape in the pack casing 100 by welding, mechanical fastening, or the like, and latticed installation spaces are formed by the latticed crossbeams 300. Further, the battery modules 500 are installed in the installation spaces, and the plurality of battery modules 500 implement the matrix arrangements as a whole in the pack casing 100. As illustrated, the battery modules 500 are arranged to have a plurality of rows R and columns C. Further, the battery modules 500 each have a sealed structure as the lateral side of the battery module 500 is surrounded by the crossbeams 300.

In this case, the module cover 700 is coupled to correspond to each of battery module columns C, and the single module cover 700 may cover all the battery modules 500 included in one column C. That is, as illustrated, the single module cover 700 covers all the plurality of battery modules 500 that constitute one column C. In this case, gaps are comparatively formed between the adjacent columns C, and the crossbeams 300 are present between the columns. Therefore, it can be noted that a fire is less likely to be transmitted between the columns. Therefore, the module covers 700 are coupled one by one while respectively corresponding to the columns C, which may implement an optimal structure. The space between the columns is opened to define a space through which cooling lines or electrical lines may pass. On the contrary, the module cover 700 may, of course, be entirely enlarged to cover all the battery modules 500 disposed in the adjacent columns C.

Because the crossbeam 300 is disposed between the pair of battery modules 500, two opposite sides of the crossbeam 300 are directed toward the battery module 500. Further, because the crossbeam 300 is disposed between the battery modules 500 at two opposite sides, an upper end of the crossbeam 300 is exposed upward. The flanges 520 of the battery module 500 are coupled to the exposed end of the crossbeam 300, such that the battery module 500 is installed in the pack casing 100. The crossbeam 300 is provided in the form of a member with a closed crosssection and thus has high collision rigidity. Therefore, the battery module 500 is installed at the corresponding point by means of the flange 520, which improves assembling rigidity of the battery module 500.

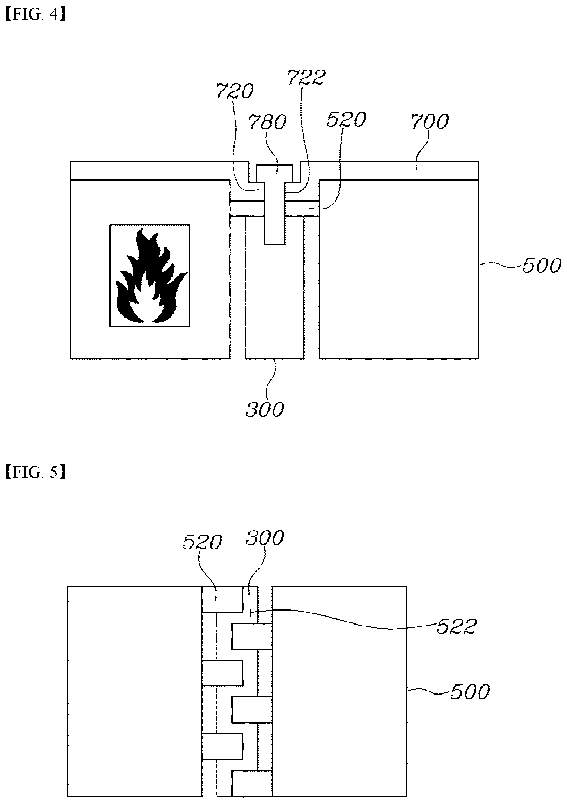

Further, the plurality of flanges 520 are spaced apart from one another and provided on the battery modules 500 at two opposite sides between which the crossbeam 300 is provided. The flanges 520 of the battery modules 500 at the two opposite sides may be disposed alternately and coupled to the crossbeams 300. FIGS. 4 and 5 illustrate the pair of battery modules 500 and the crossbeam 300 provided between the pair of battery modules 500. As can be seen in the drawings, the battery modules 500 disposed at two opposite sides with the crossbeam 300 interposed therebetween have the flanges 520 protruding toward the end of the crossbeam 300.

However, because the pair of battery modules 500 share the crossbeam 300, the plurality of flanges 520 are provided on the battery modules 500, and the flanges 520 at two opposite sides are spaced apart from one another and disposed alternately. Therefore, the arrangement of the flanges 520 illustrated in FIG. 5 may be obtained. Both the battery modules 500 at two opposite sides may be coupled to the crossbeam 300 while having the same rigidity.

Further, the crossbeam 300 may be formed to be lower in height than the battery module 500, and the flange 520 of the battery module 500 and the module cover 700 may be coupled to the end of the crossbeam 300. Because the crossbeam 300 is formed to be lower in height than the battery module 500, lines or the like may be disposed in a space between the battery module 500. The fixing portion 720 is formed in an insertion shape made by bending the module cover 700, which may increase a mechanical restraining force of the fixing portion 720.

Further, the flange 520 of the battery module 500 and the module cover 700 may be fastened to the crossbeam 300 by means of the same fastening mechanism 780. Therefore, the battery module 500 and the module cover 700 may be fastened to the crossbeam 300 at once, which may reduce assembling costs, minimize the number of fastening mechanisms 780, and achieve sufficient assembling rigidity. Further, the module cover 700 is also fastened to the crossbeam 300, which may solve a problem in which the module cover 700 is withdrawn from the battery module 500.

Specifically, the module cover 700 may include a cover portion 722 having a planar shape that covers the battery module 500, and the fixing portion 720 recessed between the adjacent cover portions 722 and coupled to the crossbeam 300. Further, the venting part 740, through which a gas or flame, which is generated in the battery module 500, is vented is formed on the cover portion 722. In addition, a through-hole 722 may be formed in the fixing portion 720, and the fastening mechanism 780 coupled to the crossbeam 300 may penetrate the through-hole 722.

Therefore, the fixing portion 720 of the module cover 700 and the flange 520 of the battery module 500 are penetrated by the fastening mechanism 780. The fastening mechanism 780 may penetrate the fixing portion 720 of the module cover 700 and the flange 520 of the battery module 500 and be fastened to the crossbeam 300.

The module cover 700 includes the fixing portion 720 between the adjacent cover portions 722 each having a flat plate shape. Further, because the single module cover 700 covers all the plurality of continuous battery modules 500, the single module cover 700 includes the plurality of cover portions 722 and the fixing portion 720.

The cover portion 722 is formed in a flat plate shape and covers the battery module 500 while being tightly attached to the upper end of the battery module 500. Therefore, the battery module 500 has a sealed structure, and the gas or flame is vented through the venting part 740 of the cover portion 722, as necessary. Further, the fixing portion 720, which is bent toward the crossbeam 300, is formed between the cover portions 722 at two opposite sides. As illustrated, the fixing portion 720 is inserted toward the end of the crossbeam 300 and fastened to the crossbeam 300, such that the adjacent battery modules 500 are eventually blocked by the crossbeam 300 and the fixing portion 720, which minimizes a likelihood that a fire propagates.

In particular, with this structure, the end of the crossbeam 300 disposed between the adjacent battery modules 500 may be covered by the fixing portion 720 of the module cover 700. Therefore, there is no surplus space between the adjacent battery modules 500 through which flame may propagate. Further, the end of the crossbeam 300 and the fixing portion 720 of the module cover 700 have planar shapes facing each other, and the flange 520 also has a flat plate shape, such that the end of the crossbeam 300, the module cover 700, and the flange 520 are attached to one another as tightly as possible, thereby minimizing a residual space.

Meanwhile, as illustrated in FIG. 5, the plurality of flanges 520 of the battery module 500 may be spaced apart from one another and coupled to the end of the crossbeam 300. Further, in this case, even though the module cover 700 is coupled, an empty space 522 may be formed between the adjacent flanges 520 by a thickness of the flange 520, as illustrated. In case that the pressure of the gas or flame is very high, the pressure may be concentrated in the empty space 522. In the present disclosure, even the very small empty space 522, which corresponds to the thickness of the flange 520, is completely blocked.

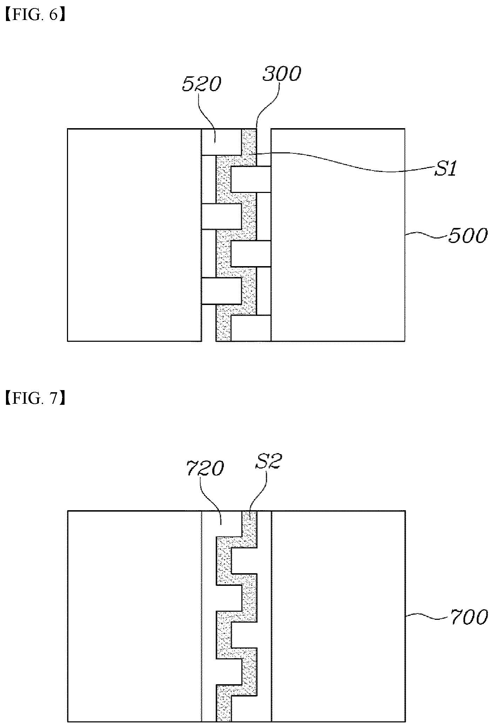

In order to block the empty space 522 between the flanges 520, spacers S1 are disposed between the plurality of spaced flanges 520, as illustrated in FIG. 6, such that the empty space 522 between the flanges 520 may be filled with the spacer S1. FIG. 6 illustrates a shape in which the spacer S1 is coupled between the flanges 520 illustrated in FIG. 5.

In order to block the transfer of flame, the spacer S1 may be made of a fire resistance material such as mica, a thickness of the spacer S1 is equal to or slightly larger than that of the flange 520, and the spacer S1 has a zigzag shape, such that the empty space 522 between the flanges is filled with the spacer S1 as the spacer S1 is disposed around the adjacent flanges 520. Therefore, as illustrated, the empty space 522 between the flanges 520 is filled with the spacer S1, such that there is no space between the module cover 700 and the crossbeam 300 when the module cover 700 is assembled to the upper sides of the flanges 520.

That is, the flange 520 and the spacer S1 may be disposed on the same plane and adjoin the fixing portion 720 of the module cover 700. Therefore, even in case that the pressure of the gas or flame is high, it is possible to more assuredly block the propagation of the gas or flame to the adjacent module.

Meanwhile, FIG. 7 illustrates a case in which a protruding portion S2 is formed on a lower surface of the fixing portion 720 of the module cover 700. In this case, the end of the crossbeam 300 is covered by the fixing portion 720 of the module cover 700, and the protruding portion S2, with which the empty space 522 between the plurality of spaced flanges 520 is filled, is formed on the fixing portion 720. The lower surface of the fixing portion 720 of the module cover 700 faces the upper surface of the crossbeam 300 and the flanges 520. When the protruding portion S2, which may fill the portion between the flanges 520, is formed on the lower surface of the fixing portion 720, an effect identical to the effect obtained by the spacer S1 illustrated in FIG. 6 is achieved.

That is, a separate spacer may be installed directly between the flanges 520. However, as illustrated in FIG. 7, the protruding portion S2 is formed on the fixing portion 720 of the module cover 700, and the protruding portion S2 serves as a spacer.

To this end, the protruding portion S2 is formed together with the fixing portion 720 when the fixing portion 720 of the module cover 700 is formed, such that the protruding portion S2 may also be made of the same fire resistance material as the module cover 700 and configured as a part of the module cover 700. Therefore, the protruding portion S2 is less likely to be withdrawn or damaged, which may minimize a likelihood of the propagation even in the event of a fire. A thickness of the protruding portion S2 may be equal to or slightly larger than a thickness of the flange 520. Like the spacer, the protruding portion S2 may be formed in a zigzag shape so as to be disposed around the flanges 520. Therefore, there is no space between the module cover 700 and the crossbeam 300 when the module cover 700 is assembled.

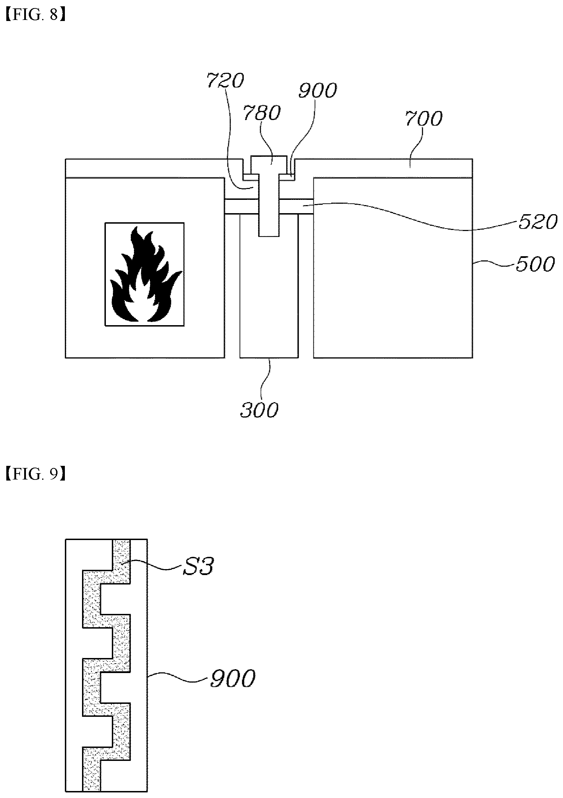

Meanwhile, as illustrated in FIG. 8, a bracket 900 is provided outside the fixing portion 720 of the module cover 700, and the bracket 900 is fastened to the crossbeam 300 together with the fixing portion 720 of the module cover 700. A pressing portion S3 is formed on the bracket 900 and presses the fixing portion 720 of the module cover 700 between the plurality of spaced flanges 520, such that the empty space 522 between the spaced flanges 520 may be filled with the fixing portion 720 of the module cover 700 pressed by the pressing portion S3.

That is, in this case, the fixing portion 720 of the module cover 700 is pressed by the separate bracket 900 outside the module cover 700, such that the empty space 522 between the flanges 520 is filled with the fixing portion 720. Because the module cover 700 is made of a fire resistance material, the pressing portion S3 of the bracket 900 pushes the module cover 700 from the outside in case that some ductility is applied, such that the empty space 522 between the flanges 520 may be filled with the pressing portion S3 as the pressed portion is deformed.

That is, the pressing portion S3 protrudes from the lower surface of the bracket 900 coupled to the outer side of the module cover 700 and has a shape similar to that of the spacer S1 in FIG. 6, and the fixing portion 720 of the module cover 700 is pressed by the pressing portion S3 from the outside, such that the fixing portion 720 of the module cover 700 is pressed between the upper end of the crossbeam 300 and the pressing portion S3 of the bracket 900. The fixing portion 720 is eventually pressed along the shape of the pressing portion S3 and fills the empty space 522 between the flanges 520. In this case, the separate bracket 900 is required, but additional assembling rigidity of the module cover 700 may be ensured by the bracket 900. Further, at the same time, there is no space between the module cover 700 and the crossbeam 300.

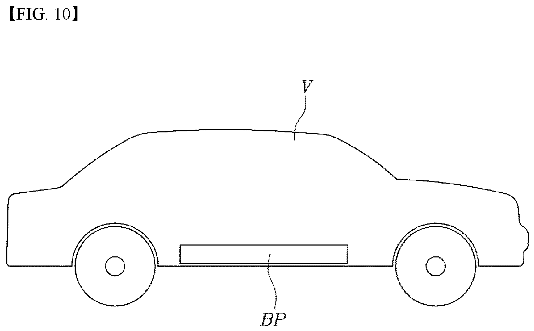

FIG. 10 illustrates an embodiment in which the battery pack BP of the present disclosure is applied to a vehicle V. The battery pack BP of the present disclosure may be representatively applied to the vehicle V. In addition, the battery pack BP may also be widely applied to industrial devices, electric energy storage systems (ESS), household energy storage device, or the like.

According to the module cover, the battery pack, and the vehicle of the present disclosure, it is possible to prevent the propagation of a fire between the adjacent battery modules in the event of a fire in the battery module, reduce the number of module covers, reduce the production costs, improve the assembling efficiency, and reduce the assembling tolerance.

While the specific embodiments of the present disclosure have been illustrated and described, it will be obvious to those skilled in the art that the present disclosure may be variously modified and changed without departing from the technical spirit of the present disclosure defined in the appended claims.

## Claims

1. A battery pack comprising:
a pack casing having a plurality of crossbeams spaced apart from one another in an internal space;
battery modules disposed between the adjacent crossbeams and each having a flange protruding outward, the battery modules being coupled to the crossbeam by means of the flanges; and
a module cover having a panel shape having an area that covers all the plurality of adjacent battery modules, the module cover having fixing portions, which are formed to correspond to the crossbeams, and coupled to the crossbeams by means of the fixing portions.

2. The battery pack of claim 1, wherein the crossbeams are disposed in a lattice shape on the pack casing, the plurality of battery modules are installed in a matrix shape having columns and rows, the module cover is coupled to correspond to the row of the battery modules, and one module cover covers all the battery modules included in one row.

3. The battery pack of claim 1, wherein two opposite surfaces of the crossbeam are directed toward the battery modules, and the flange of the battery module is coupled to an end of the crossbeam exposed between the battery modules at two opposite sides.

4. The battery pack of claim 1, wherein the plurality of flanges are spaced apart from one another and formed on the battery modules at two opposite sides disposed with the crossbeam interposed therebetween, and the flanges of the battery modules at the two opposite sides are disposed alternately and coupled to the crossbeams.

5. The battery pack of claim 1, wherein the crossbeam is formed to be lower in height than the battery module, the flange of the battery module and the module cover are coupled to an end of the crossbeam, and the flange of the battery module and the module cover are fastened together to the crossbeam by means of the same fastening mechanism.

6. The battery pack of claim 1, wherein the module cover comprises:
cover portions each having a planar shape and configured to cover the battery module; and
the fixing portion recessed between the adjacent cover portions and coupled to the crossbeam,
wherein a venting part, through which a gas or flame generated in the battery module is vented, is formed on the cover portion and
wherein a through-hole, which is penetrated by a fastening mechanism coupled to the crossbeam, is formed in the fixing portion.

7. The battery pack of claim 1, wherein the fixing portion of the module cover and the flange of the battery module are penetrated by a fastening mechanism, and the fastening mechanism penetrates the fixing portion of the module cover and the flange of the battery module and then is fastened to the crossbeam.

8. The battery pack of claim 1, wherein an end of the crossbeam disposed between the adjacent battery modules is covered by the fixing portion of the module cover, and the end of the crossbeam and the fixing portion of the module cover have planar shapes facing each other.

9. The battery pack of claim 1, wherein the plurality of flanges of the battery module are spaced apart from one another and coupled to an end of the crossbeam.

10. The battery pack of claim 9, wherein a spacer is disposed between the plurality of spaced flanges, and an empty space between the flanges is filled with the spacer.

11. The battery pack of claim 10, wherein the flange and the spacer are disposed on the same plane and adjoin the fixing portion of the module cover.

12. The battery pack of claim 9, wherein the end of the crossbeam is covered by the fixing portion of the module cover, and a protruding portion is formed on the fixing portion so that an empty space between the plurality of spaced flanges is filled with the protruding portion.

13. The battery pack of claim 9, wherein a bracket is provided outside the fixing portion of the module cover, the bracket is fastened to the crossbeam together with the fixing portion of the module cover, a pressing portion is formed on the bracket and presses the fixing portion of the module cover between the plurality of spaced flanges, and an empty space between the plurality of spaced flanges is filled with the fixing portion of the module cover pressed by the pressing portion.

14. A module cover, which covers a plurality of battery modules installed between a plurality of crossbeams in a pack casing, the module cover having a panel shape having an area that covers all the plurality of battery modules adjacent to one another with the crossbeam interposed therebetween,
wherein a fixing portion is formed on a portion corresponding to the crossbeam, and the module cover is coupled to the crossbeam by means of the fixing portion.

15. A vehicle comprising the battery pack of claim 1.
